(19) **Europäisches Patentamt European Patent Office Office européen des brevets**

(11) **EP 2 532 885 B1**

(12) **EUROPEAN PATENT SPECIFICATION**

(45) Date of publication and mention
of the grant of the patent:
**01.06.2016 Bulletin 2016/22**

(51) Int Cl.:
*F03D 7/00* (2006.01)     *F03D 7/02* (2006.01)
*F03D 9/00* (2016.01)     *H02K 11/00* (2016.01)
*H02K 7/18* (2006.01)     *H02K 15/16* (2006.01)

(21) Application number: **11169525.0**

(22) Date of filing: **10.06.2011**

(54) **Wind turbine comprising an electric generator**

Windturbine mit einem elektrischen Generator

ÉOLIENNE COMPRENANT UN GÉNÉRATEUR ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.12.2012 Bulletin 2012/50**

(73) Proprietor: **Siemens Aktiengesellschaft
80333 München (DE)**

(72) Inventors:
• **Laurberg, Hans
8000 Århus C (DK)**
• **Thomsen, Thyge Skovbjerg
7400 Herning (DK)**

(56) References cited:
**EP-A1- 1 870 566      EP-A1- 1 870 987
EP-A2- 2 106 013      WO-A1-2010/072645
DE-U1- 20 102 029      US-A1- 2008 164 697**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The invention relates to a wind turbine comprising an electric generator.

Background of the Invention

In the field of wind turbines there is a trend to always larger wind turbine rotor sizes because the diameter of the wind rotor has a quadratic influence on the wind turbine power output. However, at the same time the forces applied to the movable parts and the supporting structure of the wind turbine increase. The resulting loads may affect the structure of the wind turbine so that the requirements for monitoring integrity and early detection of degradations of components also increase.

Moreover, with larger wind turbine rotor sizes it becomes more important to take weather conditions like wind shears into consideration in the operation of a wind turbine.

US 2008/0164697 A1 discusses the use of proximity apparatus for measuring the gap between a rotor and a stator of a wind turbine generator. EP 1 870 987 A1 discloses a method and apparatus for monitoring a clearance gap of a rotary machine.

Summary of the Invention

It is an object of the present invention to provide an advantageous wind turbine comprising an electric generator.

The object is solved by a wind turbine as claimed in claim 1. The depending claims define further developments of the invention.

The inventive electric generator includes a generator rotor and a generator stator concentrically arranged around a generator axis and at a distance from each other. The electric generator further comprises a distance sensor arrangement including at least one distance sensor adapted to sense the distance between the generator rotor and the generator stator and to provide a sensor signal comprising an information about the sensed distance. The distance sensor arrangement comprises a distance sensor laterally disposed from the generator axis and aligned to sense the distance in a substantially or exactly horizontal direction.

The distance between the generator stator and the generator rotor is commonly called the air gap. Accordingly, determining the width of the air gap and determining the position of the generator rotor relative to the generator stator are equivalent. Furthermore, since the dimensions of the generator rotor and the generator stator are known in a given application, determining any distance from which the actual air gap can be derived is considered to be included within the scope of the claims. For example, according to the invention a distance between the generator rotor and the generator stator may be determined by sensing a distance between a part connected to the stator and a part connected to the rotor. Likewise, the distance between the generator rotor and the generator stator may be determined by sensing a distance between the rotor and a part connected to the stator or by sensing a distance between the stator and a part connected to the rotor.

The varying forces applied to the wind rotor propagate via the rotor shaft to the electric generator and can cause the generator rotor to temporarily deform or change its center of rotation. Moreover, the loads resulting from the forces can cause wear leading after a while to exceeding tolerances. Both can affect the air gap, i.e. the distance between the generator stator and the generator rotor. Monitoring the actual air gap in the electric generator provides several advantages because variations in the rotor position in respect to the stator allows to draw conclusions on the actual forces applied to the wind rotor and the wind turbine rotor blades as well as on their direction of action. For example, it is possible to detect looseness or other structural problems of the electric generator main bearing by detecting a change in the dimension of the air gap. Furthermore, it can be assured that the generator rotor and the generator stator do not have physical contact which would lead to severe physical damage of the electric generator or electrical damage like short circuits. If, for example, the air gap drops below a threshold value, an emergency routine can be performed which may include a braking action, pitching the rotor blades or the like. In addition, the information about the sensed distance between the generator rotor and the generator stator can be evaluated to classify the weather conditions. For example, it may be possible to detect gusty wind which may be more dangerous to the wind turbine structure because unforeseeable variations in wind speed may occur such that it is advisable to already throttle the wind turbine output power at lower (average) wind speeds. Furthermore, it may be possible to determine wind shear when a wind direction changes and the forces acting on the wind rotor rotor blades become asymmetric.

The variation of wind speed is greater in a horizontal direction than in a vertical direction. Accordingly, the greatest variances of the generator rotor position will also occur in a horizontal direction. Thus, arranging one distance sensor laterally disposed from the generator axis enables a cost-effective solution employing a low number of distance sensors or just a single distance sensor.

According to the invention the distance sensor arrangement comprises a first and a second distance sensor each of which having a respective sensor axis and a parallel projection of the sensor axis of the first distance sensor and of the sensor axis of the second distance sensor onto a plane having a surface normal parallel to the generator axis cross each other.

The presence of at least two distance sensors that are not arranged in parallel directions is sufficient to provide coordinates in as many dimensions as there are distance sensors. Thus, a number of two or more distance sensors is preferred because then a position of the electric rotor can be determined in a plane whose surface normal is parallel to the generator axis.

Also, the parallel projection of the sensor axis of the first distance sensor and of the sensor axis of the second distance sensor cross at an angle of about or exactly 90 degrees. In this case the measurements of the two distance sensors are mutually independent which simplifies any computations required for determining the generator rotor position with respect to the generator stator.

The electric generator may further comprise an evaluation unit connected to the distance sensor arrangement and adapted to determine a position of the generator rotor relative to the generator stator. This embodiment of the electric generator provides information about the generator rotor position with respect to the generator stator, which can be processed by other components of the wind turbine.

In one such embodiment of the invention, the evaluation unit is adapted to determine the position of the generator rotor as

$$x = r_s - x_c - \mathrm{sqrt}(r_r^2 - y_c^2);$$

$$y = r_s - y_c - \mathrm{sqrt}(r_r^2 - x_c^2),$$

wherein x and y are Cartesian coordinates of the position of the generator rotor, $r_s$ is an inner radius of the generator stator, $r_r$ is an outer radius of the generator rotor and $x_c$ and $y_c$ are Cartesian coordinates of the generator axis.

The coordinates computed according to the above formulae are precise but require a relatively high computational effort. For this reason in an alternative embodiment the evaluation unit is adapted to determine the position of the generator rotor as

$$x = r_s - x_c - r_r;$$

$$y = r_s - y_c - r_r,$$

wherein x and y are Cartesian coordinates of the position of the generator rotor, $r_s$ is an inner radius of the generator stator, $r_r$ is an outer radius of the generator rotor and $x_c$ and $y_c$ are Cartesian coordinates of the generator axis. Since both $r_s$ and $r_r$ are constants, so is their difference ($r_s$-$r_r$). Hence, the Cartesian coordinates of the generator rotor can be computed requiring very little computing power or be directly derived from the distance sensors' measurements. The above formulae take advantage of the fact that $x_c$ and $y_c$ are much smaller than $r_r$. For this reason sqrt ($r_r^2 - x_c^2$) and sqrt ($r_r^2 - y_c^2$) are roughly equal to sqrt($r_r^2$) = $r_r$.

The wind rotor is pivotable about a vertical axis, which is typically substantially perpendicular to a rotational axis of the wind rotor. Moreover, the wind turbine is adapted to pivot the rotor in accordance with the sensor signal from the distance sensor arrangement of the electric generator. As is known in the art, a wind turbine rotor should face the wind (in the case of an upwind design). For this reason common wind turbines comprise some means of measuring the wind direction such that the wind rotor may be pivoted to comply with the aforementioned requirement. By determining the generator rotor position (or by monitoring the air gap) a change of the wind direction or a momentary wind shear may be detected. Thus, this preferred embodiment of the invention allows for detecting and potentially reacting to wind shear.

The wind turbine may further be adapted to compare the position of the generator rotor to at least one predetermined threshold position and to generate an alarm signal in correspondence with a result of the comparison. If the air gap drops below a specific threshold, it may be necessary to throttle the output power or brake the wind turbine altogether because the forces applied to the wind rotor and the generator rotor have reached an excessive level. Any such emergency measures can be taken following the generation of an alarm signal in this preferred embodiment of the invention.

Examples of possible control actions performed in correspondence with the sensor signal may be the generation of an alarm signal, the execution of emergency routines such as braking the wind turbine, pitching the rotor blades to decrease the force applied to the wind rotor, or pivoting the wind rotor of the wind turbine to decrease wind shear.

Short Description of the Figures

Further features, properties and advantages will become clear from the following description of embodiments of the invention in conjunction with the accompanying drawings.

Figure 1 schematically shows a wind turbine according to the invention.

Figure 2 shows a first embodiment of an electric generator, however not according to the invention.

Figure 3 shows a second preferred embodiment of an electric generator according to the invention.

Detailed Description of the Figures

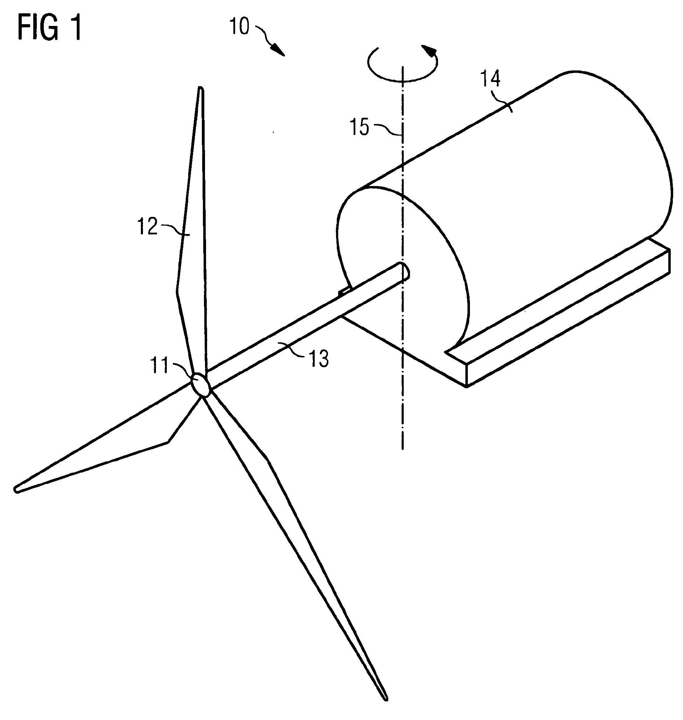

Fig. 1 shows a wind turbine 10 according to the invention. The wind turbine 10 includes a wind turbine rotor 11 which in this exemplary embodiment has three rotor blades 12. As is common knowledge in the art, any number of rotor blades 12 can be used within the scope of the invention, however, for various reasons three rotor blades are generally accepted as being an optimal choice. The wind rotor 11 is connected to an electric generator 14 by means of a rotor shaft 13 which transmits the rotational power provided by the wind rotor 11 to the electric generator 14. The electric generator 14 transforms the mechanical power into electric power. In some embodiments of the invention a transmission including gears may be used to transmit torque from the wind rotor 11 to the electric generator 14, however, such a transmission system entails extra costs and weight and thus is preferably avoided.

The wind rotor 11, the rotor shaft 13 and the electric generator 14 may be installed at the top of a tower or other support structure not shown in the figure. Thus, the wind turbine 10 is a horizontal-axis wind turbine.

The wind turbine rotor 11 is pivotable about a vertical axis 15 in order to be able to orientate the wind rotor 11 of the wind turbine 10 towards the actual wind direction.

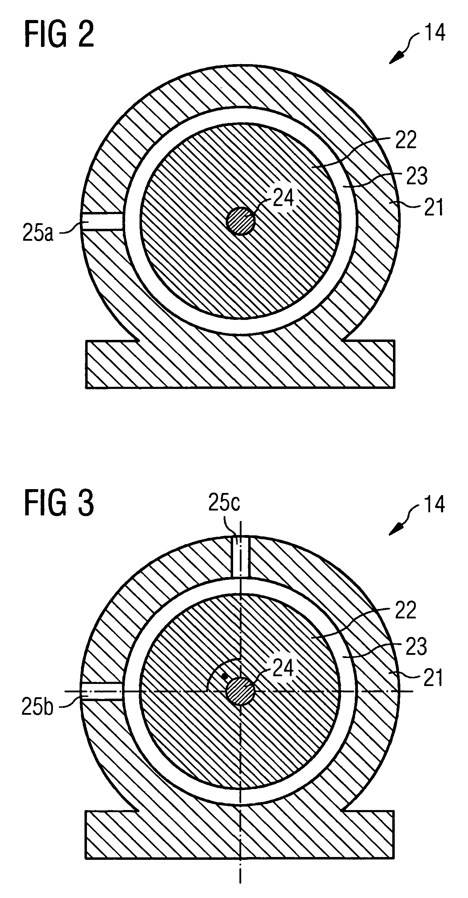

Fig. 2 shows a first embodiment of an electric generator 14 which may be used in the wind turbine 10 of Fig. 1. The electric generator 14 generally includes a generator stator 21 and a generator rotor 22. The fundamental principle of an electric generator is well-understood in the art and therefore will not be explained herein. The generator stator 21 may include a base for installing the generator stator 21. In the example of Figs. 2 and 3, the generator rotor 22, that is about a generator axis 24, is installed within the generator stator 21 (internal rotor) and may be either directly or indirectly connected to the rotor shaft 13. However, all embodiments of the invention may be implemented in an alternative way where the generator stator is installed within the generator rotor 22 which then rotates around the generator stator (external rotor).

During operation the generator rotor 22 will rotate about the generator axis 24. Since the generator stator 21 does not move during operation, an air gap 23 is required to separate the gyrating generator rotor 22 from the generator stator 21. The invention is based on the understanding that forces transmitted from the wind rotor 11 to the generator rotor 22 may cause the generator rotor 22 to temporarily or permanently change position which causes a corresponding change in the width of the air gap 23. In order to avoid contact between the generator rotor 22 and the generator stator 21 the air gap 23 can be made large, however, a larger air gap affects generator efficiency. For this reason the air gap 23 will be monitored. In the first embodiment shown in Fig. 2 a distance sensor 25a is arranged on the generator stator 21. Generally, the distance sensors may be equivalently arranged on the generator stator 21 or on the generator rotor 22, however, when the distance sensor is installed on the generator stator 21, transmission of the distance sensor signal outside the electric generator 14 is facilitated.

The distance sensor 25a is adapted to measure a distance to the generator rotor 22 and thus a width of the air gap 23. The information about the actual width of the air gap 23 provides for a number of advantages. As has already been pointed out, it becomes possible to determine a deviation of the current wind direction from the wind turbine rotor orientation (wind shear) and thus to re-orientate the wind rotor 11 correctly.

The first embodiment of the electric generator 14 includes a single distance sensor 25a only and therefore represents a low-cost solution. Since the wind moves primarily parallel to the ground even at the height of the wind rotor 11, the wind direction will also vary mostly in a horizontal plane. For this reason the deviations of the generator rotor 22 position will be the greatest in a lateral direction which is why the distance sensor 25a is laterally disposed from the generator axis 24 in the first preferred embodiment. It is safe to assume that as long as the air gap 23 measured at the site of the distance sensor 25a remains within safe boundaries, it will also at any other place in the electric generator 14.

However, generally any number of distance sensors may be present in the electric generator 14. A higher number of distance sensors provides for a more precise measurement of the air gap and also for measurements of the air gap at different locations. If there are N sensors provideing measurements $m_1$, $m_2$, ..., $m_N$, the position $[x_c, y_c]$ of the generator rotor 21 can be estimated as

$$[x_c, y_c] = \text{argmin}_{x,y}(e([d_1(x, y), d_2(x, y), ..., d_N(x, y), [m_1, m_2, ..., m_N])),$$

wherein $d_1$, $d_2$, ..., $d_N$ are functions that return the distance of a specific sensor for a given generator rotor position and e() is a distance measure such as the Euclidian norm. If the distance sensors are not distributed evenly, it may be beneficial to use a distance measure where the distance sensors closely located have less influence on e().

Generally, the distance sensor(s) can be of any available type such as inductance, light or sound-based designs.

Fig. 3 shows a second preferred embodiment of an electric generator 14 according to the invention. Items having identical numerals as items in Fig. 2 are identical or functionally equivalent to those in Fig. 2. Redundant description of them will be omitted for the sake of conciseness.

The second embodiment largely corresponds to the first embodiment of Fig. 2 but comprises two distance sensors 25b and 25c. The two distance sensors 25b and 25c are arranged in such a way that their respective sensor axes cross in the sectional plane through the electric generator 14 of Fig. 3. Preferably the sensor axes cross at a rectangular angle. The use of two distance sensors 25b, 25c allows for determining the position of the generator rotor 22 in two dimensions which makes is possible to determine the width of the air gap 23 at any place in the circumference of the generator rotor 22. If the two distance sensors 25b, 25c are arranged perpendicularly to each other, their measurements become linearly independent facilitating the computation of the position of the generator rotor 22.

The invention has been described with respect to exemplary embodiments thereof as illustrative examples of the invention. However, please note that although special embodiments have been described to explain the invention deviations from these embodiments are possible. For example, as a person skilled in the art readily recognizes, although the embodiments describe interior rotors the invention may be executed with an exterior rotor as well. Hence, the scope of the invention shall not be limited by the described exemplary embodiments but only by the appended claims.

**Claims**

1. A wind turbine (10) comprising an electric generator (14) and a wind rotor (11), the electric generator (14) including a generator rotor (22) and a generator stator (21) concentrically arranged around a generator axis (24) and at a distance (23) from each other, wherein the electric generator (14) further comprises a distance sensor arrangement including at least one distance sensor (25a, 25b, 25c) adapted to sense the distance (23) between the generator rotor (22) and the generator stator (21) and to provide a sensor signal comprising an information about the sensed distance (23), **characterised in that** the distance sensor arrangement comprises a distance sensor (25a, 25b) laterally disposed from the generator axis (24) and aligned to sense the distance (23) in a substantially or exactly horizontal direction,
wherein the distance sensor arrangement comprises a first and a second distance sensor (25b, 25c) each of which having a respective sensor axis and wherein a parallel projection of the sensor axis of the first distance sensor (25b) and of the sensor axis of the second distance sensor (25c) onto a plane having a surface normal parallel to the generator axis (24) cross each other, wherein the parallel projection of the sensor axis of the first distance sensor (25b) and of the sensor axis of the second distance sensor (25c) cross at an angle of about or exactly 90 degrees, wherein the wind rotor (11) is pivotable about a vertical axis (15), wherein the wind turbine (10) is adapted to pivot the wind rotor (11) in accordance with the sensor signal from the distance sensor arrangement of the electric generator (14).

2. A wind turbine (10) of claims 1, further comprising an evaluation unit connected to the distance sensor arrangement and adapted to determine a position of the generator rotor (22) relative to the generator stator (21).

3. A wind turbine (10) of claim 2, wherein the evaluation unit is adapted to determine the position of the generator rotor (22) as

$$x = r_s - x_c - sqrt(r_r^2 - y_c^2);$$

$$y = r_s - y_c - sqrt(r_r^2 - x_c^2),$$

wherein x and y are Cartesian coordinates of the position of the generator rotor (22), $r_s$ is an inner radius of the generator stator (21), $r_r$ is an outer radius of the generator rotor (22) and $x_c$ and $y_c$ are Cartesian coordinates of the generator axis (24).

4. A wind turbine (10) of claim 2, wherein the evaluation unit is adapted to determine the position of the generator rotor (22) as

$$x = r_s - x_c - r_r;$$

$$y = r_s - y_c - r_r,$$

wherein x and y are Cartesian coordinates of the position of the generator rotor (22), $r_s$ is an inner radius of the generator stator (21), $r_r$ is an outer radius of the generator rotor (22) and $x_c$ and $y_c$ are Cartesian coordinates of the generator axis (24).

5. The wind turbine (10) of one of the preceding claims, wherein is adapted to compare the position of the generator rotor (22) to at least one predetermined threshold position and to generate an alarm signal in correspondence with a result of the comparison.

**Patentansprüche**

1. Windenergieanlage (10) mit einem Generator (14) und einem Windrotor (11), wobei der Generator (14) einen Generatorrotor (22) und einen Generatorstator (21) aufweist, die in einem Abstand (23) zueinander konzentrisch um eine Generatorachse (24) angeordnet sind,
   wobei der Generator (14) ferner eine Abstandssensoranordnung mit mindestens einem Abstandssensor (25a, 25b, 25c) umfasst, der so ausgelegt ist, dass er den Abstand (23) zwischen dem Generatorrotor (22) und dem Generatorstator (21) erfasst und ein Sensorsignal bereitstellt, das eine Information über den erfassten Abstand (23) umfasst,
   **dadurch gekennzeichnet, dass** die Abstandssensoranordnung einen Abstandssensor (25a, 25b) umfasst, der seitlich zur Generatorachse (24) angeordnet und so ausgerichtet ist, dass er den Abstand (23) in im Wesentlichen oder genau horizontaler Richtung erfasst,
   wobei die Abstandssensoranordnung einen ersten und einen zweiten Abstandssensor (25b, 25c) umfasst, die jeweils eine entsprechende Sensorachse aufweisen, und wobei sich eine Parallelprojektion der Sensorachse des ersten Abstandssensors (25b) und der Sensorachse des zweiten Abstandssensors (25c) auf eine Ebene mit einer parallel zur Generatorachse (24) verlaufenden Flächennormalen schneiden, wobei sich die Parallelprojektion der Sensorachse des ersten Abstandssensors (25b) und der Sensorachse des zweiten Abstandssensors (25c) in einem Winkel von etwa oder genau 90 Grad schneiden,
   wobei der Windrotor (11) um eine vertikale Achse (15) schwenkbar ist, wobei die Windenergieanlage (10) so ausgelegt ist, dass sie den Windrotor (11) entsprechend dem Sensorsignal aus der Abstandssensoranordnung des Generators (14) verschwenkt.

2. Windenergieanlage (10) nach Anspruch 1, die ferner eine Auswertungseinheit umfasst, die mit der Abstandssensoranordnung verbunden und so ausgelegt ist, dass sie eine Position des Generatorrotors (22) in Bezug zum Generatorstator (21) bestimmt.

3. Windenergieanlage (10) nach Anspruch 2, bei der die Auswertungseinheit so ausgelegt ist, dass sie die Position des Generatorrotors (22) als

$$x = r_s - x_c - (r_r^2 - y_c^2)^{1/2};$$

$$y = r_s - y_c - (r_r^2 - x_c^2)^{1/2}$$

bestimmt, wobei x und y kartesische Koordinaten für die Position des Generatorrotors (22), $r_s$ ein Innenradius des Generatorstators (21), $r_r$ ein Außenradius des Generatorrotors (22) und $x_c$ und $y_c$ kartesische Koordinaten für die Generatorachse (24) sind.

4. Windenergieanlage (10) nach Anspruch 2, bei der die Auswertungseinheit so ausgelegt ist, dass sie die Position des Generatorrotors (22) als

$$x = r_s - x_c - r_r;$$

$$y = r_s - y_c - r_r$$

bestimmt, wobei x und y kartesische Koordinaten für die Position des Generatorrotors (22), $r_s$ ein Innenradius des Generatorstators (21), $r_r$ ein Außenradius des Generatorrotors (22) und $x_c$ und $y_c$ kartesische Koordinaten für die Generatorachse (24) sind.

5. Windenergieanlage (10) nach einem der vorhergehenden Ansprüche, die so ausgelegt ist, dass sie die Position des Generatorrotors (22) mit mindestens einer vorgegebenen Schwellwertposition vergleicht und einem Ergebnis des Vergleichs entsprechend ein Warnsignal erzeugt.


**Revendications**

1. Une turbine éolienne (10) comprenant un générateur électrique (14) et un rotor éolien (11), le générateur électrique (14) comprenant un rotor de générateur (22) et un stator de générateur (21) agencés de manière concentrique autour d'un axe de générateur (24) et à une distance (23) l'un de l'autre, le générateur électrique (14) comprenant en outre un agencement de capteurs de distance comprenant au moins un capteur de distance (25a, 25b, 25c) adapté de façon à détecter la distance (23) entre le rotor de générateur (22) et le stator de générateur (21) et à fournir un signal de capteur contenant une information relative à la distance détectée (23), **caractérisé en ce que** l'agencement de capteurs de distance comprend un capteur de distance (25a, 25b) disposé latéralement à l'axe de générateur (24) et aligné de façon à détecter la distance (23) dans une direction sensiblement ou exactement horizontale,
l'agencement de capteurs de distance comprenant un premier et un deuxième capteur de distance (25b, 25c), chacun d'eux possédant un axe de capteur respectif, et une projection parallèle de l'axe de capteur du premier capteur de distance (25b) et de l'axe de capteur du deuxième capteur de distance (25c) sur un plan possédant une surface normale parallèle à l'axe de générateur (24) se croisent mutuellement, la projection parallèle de l'axe de capteur du premier capteur de distance (25b) et de l'axe de capteur du deuxième capteur de distance (25c) se croisant à un angle d'environ ou exactement 90 degrés,
le rotor éolien (11) étant pivotable autour d'un axe vertical (15), la turbine éolienne (10) étant adaptée de façon à faire pivoter le rotor éolien (11) conformément au signal de capteur provenant de l'agencement de capteurs de distance du générateur électrique (14).

2. Une turbine éolienne (10) selon la revendication 1, comprenant en outre une unité d'évaluation raccordée à l'agencement de capteurs de distance et adaptée de façon à déterminer une position du rotor de générateur (22) par rapport au stator de générateur (21).

3. Une turbine éolienne (10) selon la revendication 2, dans laquelle l'unité d'évaluation est adaptée de façon à déterminer la position du rotor de générateur (22) sous la forme

$$x = r_s - x_c - \text{sqrt}(r_r^2 - y_c^2),$$

$$y = r_s - y_c - \text{sqrt}(r_r^2 - x_c^2),$$

x et y étant des coordonnées cartésiennes de la position du rotor de générateur (22), $r_s$ étant un rayon interne du stator de générateur (21), $r_r$ étant un rayon externe du rotor de générateur (22), et $x_c$ et $y_c$ étant des coordonnées cartésiennes de l'axe de générateur (24).

4. Une turbine éolienne (10) selon la revendication 2, dans laquelle l'unité d'évaluation est adaptée de façon à déterminer la position du rotor de générateur (22) sous la forme

$$x = r_s - x_c - r_r,$$

$$y = r_s - y_c - r_r,$$

x et y étant des coordonnées cartésiennes de la position du rotor de générateur (22), $r_c$ étant un rayon interne du stator de générateur (21), $r_r$ étant un rayon externe du rotor de générateur (22) et $x_c$ et $y_c$ étant des coordonnées cartésiennes de l'axe de générateur (24).

5. La turbine éolienne (10) selon l'une quelconque des revendications précédentes, qui est adaptée de façon à comparer la position du rotor de générateur (22) à au moins une position seuil prédéterminée et à générer un signal d'alarme correspondant à un résultat de la comparaison.

FIG 1

10

14

15

12

11

13

## FIG 2

## FIG 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080164697 A1

- EP 1870987 A1